(19) Europäisches Patentamt
European Patent Office
Office européen des brevets

(11) Publication number: 0 384 779 A1

(12) # EUROPEAN PATENT APPLICATION

(21) Application number: 90301969.3

(51) Int. Cl.$^{5}$: C02F 5/14

(22) Date of filing: 23.02.90

(30) Priority: 24.02.89 GB 8904256

(43) Date of publication of application: 29.08.90 Bulletin 90/35

(84) Designated Contracting States: DE FR GB IT

(71) Applicant: WARWICK INTERNATIONAL LIMITED
Wortley Moor Road
Leeds LS12 4JE(GB)

(72) Inventor: Holt, John Michael
2 Bryn Felin
Pentre Halkyn, Clwyd(GB)

(74) Representative: Jones, Helen Marjorie Meredith et al
Gill Jennings & Every 53-64 Chancery Lane
London WC2A 1HN(GB)

(54) ## Scale inhibition.

(57) Methylenephosphonated lower alkyl amine derivatives especially the dimethylenephosphonated derivative of ethanolamine are described as calcium carbonate scale inhibitors particularly useful where there is dissolved iron present.

EP 0 384 779 A1

## SCALE INHIBITION

The present invention relates to a process for inhibiting scale formation in aquatic systems in which iron is present. The process involves the use of an amino methylene phosphonate.

Most natural waters contain dissolved salts such as calcium, magnesium etc. When these salts are subjected to heating the dissolved salts may form insoluble salts which can deposit either as scale on a heat transfer surface in contact with the water or aqueous system or as a precipitate in the bulk water. Severe problems are often encountered by these salts exceeding their solubility products.

Scale deposition on heat transfer surfaces are harmful because they lower the heat transfer efficiency of the surface and can cause overheating and damage to equipment with the possibility of failure. Other related problems include obstruction of flow, localised under deposit corrosion, wear of components and unscheduled shutdown.

The most common of all scales is calcium carbonate. This is formed by the thermal decomposition of the bicarbonate ion, which is present in most natural waters, to form carbon dioxide, carbonate and water. The carbonate ion subsequently precipitates from the solution as calcium carbonate. Calcium carbonate has a much lower solubility than calcium bicarbonate and also an inverse solubility product ie the solubility decreases with increase in temperature.

Many phosphonic acids and their water-soluble salts, usually alkali ammonium, amine or metal salts, are known to be useful as scale inhibitors. Frequently used phosphonates include: 1-hydroxyethane diphosphonic acid (HEDP), 2-phosphonobutane-1,2,4-tricarboxylic acid (PBTC), 2-hydroxyphosphonoacetic acid (HPA) and hydroxymethyl phosphonic acid (HMP) and aminomethylene phosphonates, such as nitrilotris(methylene phosphonic acid) (NTMP) ethylenediaminetetra(methylene phosphonic acid) (EDTMP) diethylenetriaminepenta(methylene phosphonic acid) (DETMP) and hexamethylenediaminetetra(methylene phosphonic acid) (HMDTP). However the performance of these phosphonates are severely restricted in the presence of dissolved iron.

The efficiency of a scale inhibitor may be assessed either by static tests or by dynamic tests. In a static test an aqueous solution of calcium carbonate containing a compound, which is to be tested for its scale inhibition properties, is allowed to stand for a given period, in some instances until the concentration of dissolved calcium remains constant. The ability of the compound under test to retain calcium ions in solution indicates its properties as a scale inhibitor. Another test which simulates a practical system involves dynamic conditions. Water containing calcium carbonate is moved through a capilliary tube and the rate of formation of scale blocking the tube is measured in the presence and absence of the compound under test ie the increase in pressure. This test can often be a better indicator of the practical usefulness of scale inhibitors than the static test.

The performance of the above phosphonates as scale inhibitors has now been found to be inhibited by dissolved iron both in the static and the dynamic tests.

In US-A-2917528 alkanolamine alkane phosphonic acids are disclosed as chelants, inter alia for calcium and ferric iron. The dimethylene phosphonated derivative of mono ethanolamine is described as having useful properties as an iron sequesterant but forms an insoluble precipitate with calcium ions. Sequestrants are used in stoichiometric amounts relative to the ions which they are intended to sequester.

US-A-3336221 describes the use of methylenephosphonated amines, including derivatives of diethanolamine and ethylene diamine, as inhibitors of various types of scale formation, particularly barium sulphate scale. There is no mention of the presence of iron in any of the systems. There is no disclosure of methylene phosphonated derivatives of monoethanolamine.

EP-A-0120983 describes one solution to the problem of inhibiting calcium carbonate scale in the presence of dissolved iron. In the process an iron selective chelant, phytic acid, is incorporated into brackish water in combination with a scale inhibitor, in that case, poly acrylic acid.

The present invention is based on the discovery that methylene phosphonated derivatives of ethanolamine and structurally related compounds have useful scale inhibiting properties, especially in the presence of dissolved iron.

In a first aspect of the present invention a new scale inhibitor composition comprises methylenephosphonated monoethanolamine.

In this aspect of the invention there is also provided the new use of methylenephosphonated mono ethanolamine in the manufacture of a composition for use in the inhibition of scale formation in aqueous liquids.

In this aspect of the invention the scale whose formation is inhibited is usually calcium carbonate. The invention is of most utility where the aqueous liquid where scale inhibition is required contains dissolved iron ions in an amount of at least 1 ppm, preferably at least 2 ppm, and more preferably more than 5 or 10 ppm, for instance sometimes more than 50 ppm.

The derivative usually comprises mainly dimethylenephosphonated derivative but can include a proportion of monomethylenephosphonated derivative.

In a second aspect of the invention, a new process of inhibiting scale formation in water systems in the presence of dissolved iron comprises adding a scale inhibitor and is characterised in that the scale inhibitor is a methylene phosphonated amine derivative which has an iron resistance (as hereinafter defined) of greater than 50%.

The iron resistance of a scale inhibitor assesses the amount of phosphonate remaining in solution in an aqueous medium containing calcium carbonate and iron in a static test. The phosphonate left in solution, which has not been precipitated out of the solution, is able to act as a scale inhibitor for the calcium carbonate. The test is conducted as follows:

## REAGENTS

1. Threshold Solution 1 (T.S.1) 3200ppm Malk (as $CaCO_3$ using $NaHCO_3$) Malk = alkalinity to methyl orange 5.38 $NaHCO_3$ (anhydrous) per litre
2. Threshold Solution 2 (T.S.2) 8000ppm CaH (as $CaCO_3$ using $CaCl_2$) CaH = calcium hardness 8.88g $CaCl_2$ (anhydrous) per litre or 11.76g $CaCl_2 2H_2O$ per litre
3. $Fe^{3+}$ Solution : 1000ppm as Fe
4. Dilute solution of additive (usually 1000ppm)
5. Dilute NaOH for pH adjustment

## METHOD

To a flask is added 18.75 ml of TS2, 400ml of de-ionised water, 2.5ml of $Fe^{3+}$ solution, the 5ml of additive solution and 22.44ml of TS1. This solution is mixed and made up to 500ml with de-ionised water, to provide CaH of 300ppm (as $CaCO_3$) and Malk of 150ppm (as $CaCO_3$), 5ppm $Fe^{3+}$ and 10ppm additive. The pH is then adjusted to pH8.5 with dilute sodium hydroxide and transferred to a bottle. The bottle is sealed and placed in a water bath at 50° C for 24 hours. After this time, a sample is removed and filtered through a 0.45µm filter. The phosphonate concentration of the filtrate is determined using a conventional phosphonate assay.

The iron resistance of the phosphonate is reported as the percentage of the original phosphonate that remains in solution at the end of the test. To be useful in the present invention the iron resistance must be at least 50% that is at least 50% of the phosphonate additive under test should remain in solution after the 24 hour test.

In this aspect of the invention the amine derivative is preferably a dimethylenephosphonated derivative of a lower alkyl primary amine, in which the alkyl group may be unsubstituted or substituted with one or more groups selected from hydroxy and lower alkoxy groups. The lower alkyl amine preferably has two or three carbon atoms in the alkyl group, and is most preferably a substituted or unsubstituted ethyl amine derivative. Lower alkoxy substituents may contain 1 to 4 carbon atoms, preferably 1 to 2 carbon atoms, most preferably 1 carbon atom.

Suitable compounds are derivatives of ethylamine, 2-methoxy ethylamine, 3-amino-1-propynol and 2-(2-amino ethylamino)-ethanol and, most preferably, ethanolamine.

The amino methylene phosphonic acids are usually provided in salt form, that is where each phosphonic acid group is in the fully neutralised form, as a salt of an alkalimetal, ammonium or amine.

In this aspect of the invention the compound preferably has a dynamic scale inhibition in the presence of iron (as herein after defined) of at least 50%, preferably at least 60 or 70%.

The above mentioned dynamic scale inhibition test is carried out as described in the specific Examples below.

The phosphonate used in the invention may be used in its free acid, amine, ammonium or alkalimetal salt form.

The present invention is of use in any of the typical aqueous systems to be affected by scale problems, including oil well systems, cooling or steam raising systems, sea water evaporators, reverse osmosis units etc. The systems may be recirculating systems or may be single pass systems.

It is thought that the scale inhibitor is acting as a "threshold agent". These act in a manner such that precipitation is prevented by using a concentration of scale inhibitor which is much lower than that required to sequester the scale forming cation. A substoichiometric amount of the scale inhibitor stabilises a supersaturated solution from precipitation, probably by adsorption onto the crystal surface to inhibit or modify crystal growth, or prevent the attachment of crystals to surfaces.

The scale inhibitor may be dosed into the aqueous liquor in conventional manner. They may thus be continuously added to the aqueous liquid or may be added as a single dose in a predetermined period, the latter dosing method being suitable for recirculating systems.

The process of the invention is generally carried out in the presence of at least 1ppm iron (as ferrous or ferric ions), more usually in the presence of at least 2ppm and is particularly useful in the presence of at least 5ppm iron or even up to 10ppm, or 50ppm or more. The phosphonate is added in amounts in the range 0.05ppm to 50ppm, usually in the range 0.1ppm to 25ppm, more usually 0.55 to 10ppm.

The scale inhibition process of the invention may be carried out in the presence of other compounds used to augment the phosphonate scale inhibitor. These may include other scale inhibitors, including other phosphonate scale inhibitors, dispersing agents, precipitating agents, corrosion inhibitors, sequestering agents, antifoams and biocides.

The phosphonates used in the present invention may be supplied in the usual types of compositions, usually in aqueous solution, preferably of maximum possible concentration, for instance 25 to 50% or more. When those phosphonates are to be used in conjunction with other compounds, for instance any of those mentioned above, the active ingredients may be provided in a single composition, where they can be added together to the system, for instance a single aqueous formulation with one or both the actives in solution, or may be provided in separate compositions, for instance where they are added at separate points in the system or are incompatible with each other.

The following examples illustrate the invention:

Example 1 - Preparation of 2-hydroxyethylimino-bis (methylenephosphonic acid) (HEBMP)

To a resin flask equipped with mechanical stirrer, water cooled condenser, thermometer and dropping funnel was added 383g (2 moles) of 99.5% phosphorous acid and 235g (1 mole) of 36% hydrochloric acid. The flask contents were cooled to 3° C in an ice/water mixture. 143g (1 mole) of 99% ethanolamine was added over two hours and temperature allowed to rise to 50° C. After the addition was complete the reaction mixture was heated to 95° C. 384g (2 moles) of 30%formaldehyde solution was added at 95° C. The mixture was heated to reflux and maintained for a further 3 hours.

The final product was purified by successive vacuum distillations before neutralising to the disodium salt with 50% sodium hydroxide solution.

This yielded a very pale yellow solution of pH2 and was followed by subsequent dilution to produce a 12.5% active solution. Analysis of the product by nmr showed it to be a mixture of about 40% by weight of the di-substituted compound, 30% of the internally esterified di-substituted compound (ie in which one of the phosphonate groups had formed an ester linkage with the hydroxy group on the same molecule and about 30% of monosubstituted compound.

Example 2 - Iron Resistance

The product mixture of Example 1 was compared with various other conventional scale inhibitor phosphonates and with other related phosphonates for iron resistance, using the method described above, The results are given in the table below.

TABLE 1

| Additive | % Phosphonate remaining in solution (iron resistance) |
|---|---|
| HEBMP | 71 |
| NTMP | 8 |
| EDTMP | <5 |
| DETMP | 8 |
| HMDTMP | 12 |
| HEDP | 12 |
| EBMP | 78 |
| DEAMMP[2] | 74 |
| HPBMP[3] | 96 |
| HBBMP[4] | 50 |
| HEAETMP[5] | 53 |

1. Dimethylene phosphonated derivative of ethylamine.
2. Monomethylene phosphonated derivative of diethanolamine.
3. Dimethylene phosphonated derivative of 3-hydroxypropylamine.
4. Dimethylenephosphonated derivative of hydroxy t-butylamine.
5. Trimethylene phosphonated derivative of 2-(2-hydroxy)ethylamino ethylamine. Compounds 1-5 made by a similar method as described in Example 1 from their amines.

The results show that HEBMP, EBMP, DEAMMP and HPBMP all have a very high resistance to iron in this static test. HBBMP and HEAETMP have medium resistance to iron. In contrast all of the conventional scale inhibitors are severely adversely affected by the presence of iron.

Example 3 - Calcium carbonate threshold tests in the presence and absence of iron.

10ml TS2 (see above), 165-Xml of de-gassed (nitrogen purged) deionised water and Xml of additive solution are placed into a clean glass test jar. The resulting solution is purged with oxygen-free nitrogen for several minutes until the pH stabilises (ie no carbon dioxide remains). A solution of TS1 (see above) is purged with nitrogen until pH9 is reached. 25ml purged TS1 solution is added to the test solution to give CaH of 400ppm and Malk of 400ppm (both as $CaCO_3$). The pH of the resulting solution is adjusted accurately to the desired pH by further purging with nitrogen. The container is sealed and placed in a water bath at 60 °C for 24 hours (after which time the soluble CaH remains virtually constant).

At the end of the test period a sample is removed filtered through a 0.45 µm millipore filter and then assayed for soluble calcium by titration with 0.01M EDTA. For each test a blank is obtained by carrying out the same test on a solution containing no scale inhibitor. The percentage inhibition is determined by the following formula

$$\%\ \text{Inhibition} = \frac{\text{titre for Additive} - \text{titre for Blank}}{\text{titre for Initial CaH} - \text{titre for Blank}}$$

The amounts of additive solution added (X) varies according to the concentration of the solution and the final concentration required in this case 2.5ppm or 5.0ppm. In tests carried out in the presence of iron, part of the de-gassed de-ionised water is replaced by $Fe^{3+}$ solution (see above) to give an iron concentration of 10ppm.

The results are shown in the following table.

TABLE 2

| Additive | Dose (ppm) | % Inhib$^n$ | % Inhib$^n$ with Fe |
|---|---|---|---|
| HEBMP | 2.5 | 55 | 42 |
| | 5.0 | 85 | 71 |
| NTMP | 2.5 | 81 | 9 |
| | 5.0 | 95 | 26 |
| EDTMP | 2.5 | 81 | 6 |
| DETPMP | 2.5 | 83 | 27 |
| HMDTMP | 2.5 | 93 | 17 |
| HEDP | 2.5 | 89 | 28 |
| PBTC | 2.5 | 100 | 48 |
| EBMP | 5.0 | 44 | 47 |
| DEAMMP | 5.0 | 20 | 22 |
| HPBMP | 5.0 | 34 | 32 |
| HBBMP | 5.0 | 72 | 36 |
| HEAETMP | 5.0 | 100 | 41 |

The results show that in a static test the performances of HEBMP and EBMP in the absence of iron are worse, especially at low dosage levels, than the performances of the other conventional scale inhibitors as threshold inhibitors but are nevertheless adequate. However their performances are affected only to a small degree by the presence of iron, whereas most of the other scale inhibitors are severely adversely affected by iron. The iron sensitivity of these compounds correlates with their iron resistance reported above. The performance of DEAMMP as a scale inhibitor is inadequate in the presence or absence of iron.

Example 4 - Calcium carbonate dynamic scale inhibition (in the absence of iron).

This test is designed to monitor the ability of an additive to inhibit the formation of calcium carbonate scale under dynamic conditions. It is a closer simulation of a real-life system than the previously described threshold tests and gives a better measure of the ability of an additive to inhibit scale in a practical system.

The test is carried out on P-MAC apparatus. The P-MAC dynamic scale testing equipment operates on the following principle : scaling (solutions (calcium chloride and sodium hydrogen carbonate) are mixed and the resulting calcium bicarbonate solution is pumped through a microbore tube situated in a heating bath at higher temperature. When the solution enters the hot coil, carbon dioxide is expelled and the less soluble calcium carbonate is produced. This is deposited as a thin layer on the walls of the tube. This deposition will decrease the bore diameter of the tube resulting in an increase in fluid viscosity and pressure drop across the coil. The change in pressure across the coil is monitored and displayed as a scaling curve on an external recorder.

a) For a first series of tests the stock solutions are calcium chloride 1.25g/ℓ and sodium hydrogen carbonate 3.33g/ℓ. These are mixed to give the following conditions:

CaH : 550ppm (as $CaCO_3$)
Malk : 975ppm (as $CaCO_3$)
Temp : 65 °C
combined Flowrate : 1530 : ml/h

The mixed solutions are pumped through the tube for a period during which there is gradual scale build up and thus pressure increase. When the pressure reaches a predetermined value the addition of additive under test to give a concentration of 0.5ppm is commenced. Pressure recording is continued until a change in the gradient of the scaling curve can be detected and measured.

The % inhibition is calculated from the scaling curve produced :

ie

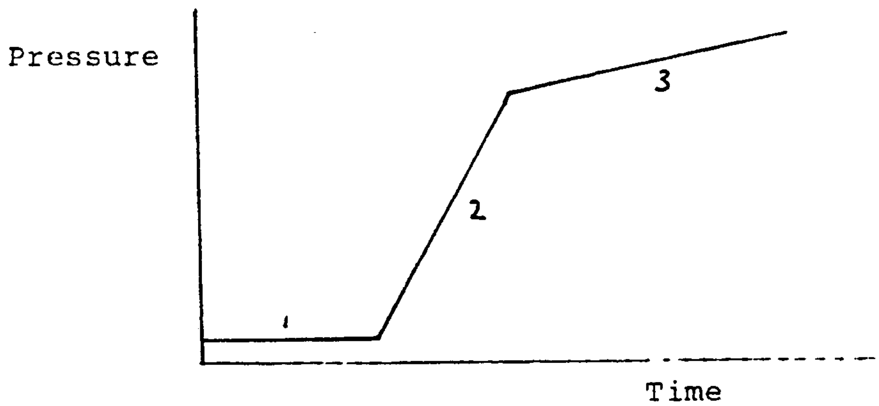


1. Baseline : no scale formation
2. Scale formation
3. Scale inhibition

$$\% \text{ inhibition} = \frac{\text{Gradient 2} - \text{Gradient 3}}{\text{Gradient 2}} \times 100$$

The results are shown in Table 3 below:

TABLE 3

| Addititive | % Inhibition |
|---|---|
| HEBMP | 75 |
| NTMP | 66 |
| EDTMP | 56 |
| DETMP | 61 |
| HMDTMP | 50 |
| HEDP | 63 |
| PBTC | 67 |
| EBMP | 94 |

The results show that HEBMP Has surpirsinlgy good dynamic scale inhibiting properties, indeed far better than might have been expected from consideration of its performance in the static test relative to the conventional sequestrants tested.

b) For a second series of tests the stock solutions are calcium chloride 0.43g/ℓ and sodium hydrogen carbonate 1.28g/ℓ. These are mixed to give the following conditions:

CaH: 190 ppm (as $CaCO_3$)
Malk: 375 ppm (as $CaCO_3$)
Temp: 75 °C

The method as described in part a) was repeated with the other details the same as in that series, to give the following results:

TABLE 4

| Additive | % Inhibition |
|---|---|
| HEBMP | 98 |
| HPBMP | 91 |
| HBBMP | 61 |
| HEAETMP | 96 |

These results show that of the phosphonates the ethanolamine derivative has the best dynamic scale inhibiting properties.

Example 5 - Calcium Carbonate dynamic scale inhibition in the presence of iron

This test uses the same P-MAC equipment as Example 4 but the method and conditions have been adapted to show the effect of iron in the system. A recirculating test has been devised which permits a much longer contact time between the individual phosphonate and the iron. The test is run on the principle that the inhibitor is added at a dose level which gives almost complete inhibition. Iron is added to the system and the potentially scale forming solution is recirculated in the presence of both inhibitor and iron. Any additive which is particularly sensitive to iron will have a reduced scale inhibiting efficiency and should not be able to prevent scale from forming.

On the other hand, additives which are not sensitive towards iron will be unaffected and should maintain a high level of inhibition.

The test is carried out under the following conditions:
CaH : 200ppm
Malk : 375ppm
Temp : 75°C
Flow Rate : 1500mls/hour
Additive Concentration : 0.5ppm
Iron concentration : 10ppm

The test solution is made up including all of the above components and is recirculated through the system at the above rate.

The % scale inhibiting efficiency may be calculated from determining the gradients of the scaling curves and comparing to a blank curve ie with no inhibitor present.

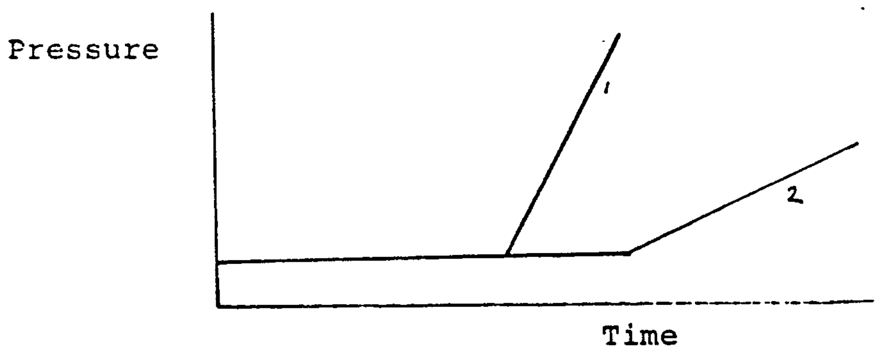


1 gradient blank ie no inhibitor
2 gradient treated ie with inhibitor

Calculation

$$\% \text{ scale inhibiting efficiency} = \frac{\text{gradient 1} - \text{gradient 2}}{\text{gradient 1}} \times 100$$

The results are shown in Table 5 below:

TABLE 5

| Additive | % Inhibition |
|---|---|
| HEBMP | 94 |
| NTMP | 0* |
| EDTMP | 28 |
| DETMP | 0* |
| HMDTMP | 29 |
| HEDP | 35 |
| PBTC | 20 |
| HPA | 0* |
| HMP | 27 |
| EBMP | 40 |
| HPBMP | 12 |

* Slight increase in scaling rate

The results show that HEBMP gives a very high rate of scale inhibition and is unaffected by the presence of iron. In contrast all the conventional scale inhibitors as well as EBMP and HPBMP are adversely affected by the presence of iron, indeed the incorporation of NTMP and DETMP seems to increase the rate of scaling in the presence of iron.

## Claims

1. A scale inhibitor composition comprising methylenephosphonated mono-ethanolamine.
2. Use of methylenephosphonated mono-ethanolamine in the manufacture of a composition for use in the inhibition of scale formation in aqueous liquids.
3. Use according to claim 2 in which the scale formation which is inhibited is calcium carbonate scale formation.
4. Use according to claim 2 or 3 in which the aqueous liquid contains more than 1 ppm, preferably more than 2 ppm, more preferably more than 5 ppm, dissolved iron ions.
5. A process of inhibiting scale formation in water systems, which comprises adding a scale inhibitor, in which the scale inhibitor is methylenephosphonated mono-ethanolamine.
6. Use of a methylenephosphonated amine derivative as a scale inhibitor for aqueous liquids containing dissolved iron ions in an amount of at least 1 ppm in which the amine derivative has an iron resistance (as hereinbefore defined) of greater than 50%.
7. A process according to claim 6 in which the compound is a dimethylenephosphonated derivative of lower alkyl primary amine, in which the alkyl group may be unsubstituted or substituted with one more more groups selected from hydroxy and lower alkoxy.
8. A process according to claim 6 or claim 7 in which the compound has a dynamic scale inhibition in the presence of iron (as hereinbefore defined) of at least 50%, preferably at least 60%, more preferably at least 70%.
9. A process according to claim 7 or 8 in the which the phosphonate comprises methylenephosphonated ethanolamine.

10. A process according to claim 5, 8 or 9 in which the ethanolamine derivative comprises hydroxyethylimino-bis(methylene phosphonic acid).

11. A process according to claim 9 or 10 in which the ethanolamine derivative comprises the internal cyclic ester derivative of hydroxyethylimino-bis(methylene phosphonic acid).

12. A process according to any of claims 5 to 11 in which the scale formation which is inhibited is calcium carbonate scale formation.

European Patent Office

# EUROPEAN SEARCH REPORT

Application Number

EP 90 30 1969

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| D,X | US-A-2 917 528 (W.M. RAMSEY et al.) * Whole document * | 1-2,4-10 | C 02 F 5/14 |
| D,X | US-A-3 336 221 (P.H. RALSTON) * Column 2, lines 27-69 * | 1,3,5,7,9-10,12 | |
| Y | FR-A-2 148 260 (MONSANTO) * Page 23, line 3 - page 25, line 8 * | 1-9 | |
| D,Y | EP-A-0 120 983 (CHEMICAL SCIENCES) * Page 7, line 1 - page 8, line 7 * | 1-9 | |
| A | US-A-3 620 974 (J.R. STANFORD et al.) * Column 1, line 73 - column 2, line 63 * | 1-4,11 | |
| A | EP-A-0 172 950 (DOW) * Pages 12-14 * | 1-12 | |
| A | US-A-3 787 534 (J.R. STANFORD et al.) * Whole document * | 1-12 | TECHNICAL FIELDS SEARCHED (Int. Cl.5) |
| A | US-A-4 229 294 (D. REDMORE et al.) * Column 14, line 5 - column 15, line 33 * | 1-12 | C 02 F<br>C 07 F |
| A | EP-A-0 118 395 (CIBA-GEIGY) * Pages 3-8 * | 1-4,11-12 | |
| X | EP-A-0 093 508 (BETZ EUROPE) * Page 16; pages 36-38 * | 1-3,5-10 | |
| A | FR-A-2 184 939 (MONSANTO) * Page 8, example 3 * | 1-4 | |

The present search report has been drawn up for all claims

| Place of search | Date of completion of the search | Examiner |
|---|---|---|
| THE HAGUE | 31-05-1990 | VAN AKOLEYEN H.T.M. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document